# FASCICULE DE BREVET EUROPEEN

(11) **EP 1 181 186 B1**
(45) Date de publication et mention de la délivrance du brevet: **15.06.2005**
(21) Numéro de dépôt: 01919539.5
(22) Date de dépôt: 22.03.2001
(51) Int. Cl.: B62J 6/04

(54) **SUPPORT DE CONTACTS POUR DISPOSITIF DE SECURITE DE CYCLES**
KONTAKTTRÄGER FÜR FAHRRADSICHERHEITSVORRICHTUNG
CONTACT SUPPORT FOR CYCLE SAFETY DEVICE

(30) Priorité: 23.03.2000 FR 0003701
(43) Date de publication de la demande: 27.02.2002
(73) Titulaire: Gautier, Gérard, 75016 Paris (FR); Broquin-Lacombe, Emmanuel, 94410 Saint Maurice (FR); Jeulin, Yves Michel, 75013 Paris (FR)
(72) Inventeur: Gautier, Gérard, 75016 Paris (FR); Broquin-Lacombe, Emmanuel, 94410 Saint Maurice (FR); Jeulin, Yves Michel, 75013 Paris (FR)
(74) Mandataire: Hennion, Jean-Claude
(86) Numéro de dépôt international: PCT/FR2001/000864
(87) Numéro de publication internationale: WO 2001/070561

(56) Documents cités:
- US-A- 4 896 138

## Description

L'invention se rapporte au domaine technique des accessoires de sécurité pour véhicules de type bicyclettes, cycles, vélos, tandems, tricycles, vélos tout terrains (VTT), vélos tout chemins (VTC), motocycles, et autres engins sur roues équivalents.

Afin de simplification, ces véhicules seront désignés par la suite sous le simple terme de « cycles » et leurs utilisateurs « cyclistes ».

L'invention se rapporte plus particulièrement à un accessoire de sécurité lors du freinage commandé par les utilisateurs de tels véhicules.

Les moyens de freinage de ces véhicules comprennent les freins à tambours, les freins commandés par rétropédalage, les freins hydraulique ou pneumatiques, et les freins à friction sur jantes de roues.

L'invention concerne plus particulièrement les véhicules du type général mentionné en introduction, pourvus de systèmes de freinage à commande par câbles.

Tel est en particulier le cas des freins à friction sur jantes. Ces freins sont, par exemple, de type cantilever ou V brake, ces freins cantilever comprennent des mâchoires parfois appelées leviers articulés ou étriers, ces mâchoires étant pourvues de patins ou sabots à garnitures de frottement, le serrage de la jante de roue par cette mâchoire étant commandé par un câble. Le mouvement du câble est classiquement provoqué par l'actionnement d'une poignée montée sur le guidon du véhicule, le câble de commande reliant ladite poignée aux mâchoires de freins. Lorsque la poignée est actionnée, le câble de commande est entraîné sous tension dans son tube de guidage, provoquent le serrage des mâchoires de freins et la friction des garnitures sur la jante de roue. Des ressorts de rappels ou tout autre moyen élastique équivalent assurent le retour de la mâchoire en position ouverte lorsque la poignée de commande est relâchée. Le tirage du câble peut être central ou latéral. Conventionnellement, chaque roue est pourvue d'une mâchoire de freinage reliée par un câble de commande à une poignée montée sur le guidon.

Pour des raisons de sécurité, il est très important que les cyclistes soient distingués notamment dans l'obscurité par les autres usagers de la route, en particulier lorsque ces cyclistes freinent, dans la mesure où ce freinage précède souvent un changement de direction.

On connaît déjà, dans l'art antérieur différents systèmes de commandes de lumières de signalisation de freinage pour cycles.

On peut se reporter, par exemple, aux documents suivants : FR-A-2 756 803, FR-A-2 708 557, FR-A-2 652 052, DE-A-19 633 018, DE-A-19 654 628, DE-A-19 808 774, US-A-5 526 240, US-A-5 457 612, US-A-4 899 023, US-A-4 275 280, US-A-4 031 343, US-A-3 906 443, US-A-3 870 846, GB-A- 2 236 905, GB-A-2 229 052, GB-A-2 130 015, WO-A-91/12977.

Certains dispositifs de l'art antérieur proposent la mise en place de contacteurs sur le guidon. Ainsi, par exemple, le document EP-A-0 109 763 décrit un interrupteur pour lumière de frein de bicydettes comprenant des contacts électriques contenus dans un tube fermé déformable aplati sous l'action directe du levier de frein. Dans ce type de montage, la détection du freinage dépend de l'adéquation relative de la forme du tube à la forme et à la course du levier de frein, de sorte que ce montage ne peut être monté en standard sur tout type de cycles. Par ailleurs, il est difficile de contrôler l'état des contacts électriques contenus dans le tube fermé sans un démontage complet.

D'autres dispositifs de l'art antérieur comprennent des contacteurs placés au plus prêt des mâchoires de freinage. Ainsi, par exemple, le document WO-A-86/00055 décrit un équipement de freinage pour bicyclette dans lequel une lampe est éclairée par contact d'une mâchoire de freinage sur une borne de circuit électrique. Ce type de montage s'avère peu sûr lorsque les cycles sont employés en terrains boueux.

Les systèmes de commandes connus de l'art antérieur s'avèrent de structure complexe et coûteuse. De plus, ces systèmes ne sont le plus souvent pas conçus pour être installés sur tout type de cycles existant. La fragilité de certains moyens de détection du mouvement de câble de freinage connus de l'art antérieur les rend par ailleurs peu fiables, notamment lorsque le cycle a été utilisé sur revêtements boueux.

L'invention vise à fournir un dispositif de sécurité au freinage pour cycles à freins commandés par câbles, ledit dispositif comportant un contacteur de feux arrière « stop » ne présentant pas les inconvénients des dispositifs connus dans l'art antérieur, ce dispositif étant peu coûteux, fiable, d'entretien aisé, rapide à mettre en place, adaptable sur tout modèle de cycle conventionnel, sans modification de la structure générale dudit cycle et sans dimensionnement particulier du dispositif en fonction du modèle de cyde à freins commandé par câbles.

A cette fin, l'invention se rapporte, selon un premier aspect, à un support de contacts apte à être monté sur un câble de commande de freins de cycles, ce support comprenant :
- une première partie, destinée à être montée fixe par rapport au cadre de cycle, cette partie fixe présentant une première surface de contact électrique,
- une deuxième partie, destinée à être mobile par rapport au cadre de cycle, apte à être solidarisée au câble, cette partie mobile présentant une seconde surface de contact électrique,
ce support comprenant des moyens de liaison entre la partie fixe et la partie mobile, ces moyens de liaison étant aptes à être déformés de manière élastique entre :
- un état extrême relâché pour le support, dans lequel les surfaces de contact sont écartées l'une de l'autre, et
- un état tendu pour le support, dans lequel les surfaces de contact sont en appui l'une contre l'autre, les moyens de liaison étant alors déformés de manière élastique.

Par « moyens de liaison aptes à être déformés de manière élastique, on désigne ici des moyens configurés de telle sorte qu'ils ne subissent aucune déformation plastique notable lorsque le support est en fonctionnement.

D'autres objets et avantages de l'invention apparaîtront au cours de la description suivante de modes de réalisations, description qui va être effectuée en référence aux dessins annexés dans lesquels :
- la figure 1 est une vue de côté d'un contacteur pour dispositif de sécurité selon l'invention, en position montée sur un câble de commande de frein pour cycles, le câble étant en situation de non-serrage des freins ;
- la figure 2 est une vue de dessus du contacteur représenté en figure 1;
- la figure 3 est une vue latérale droite du contacteur représenté en figure 1;
- la figure 4 est une vue latérale gauche du contacteur représenté en figure 1 ;
- la figure 5 est une vue selon le plan V- V de la figure 1 ;
- la figure 6 est une vue selon le plan VI- VI de la figure 1 ;
- la figure 7est une vue de côté d'un contacteur pour dispositif de sécurité, selon une variante de réalisation.

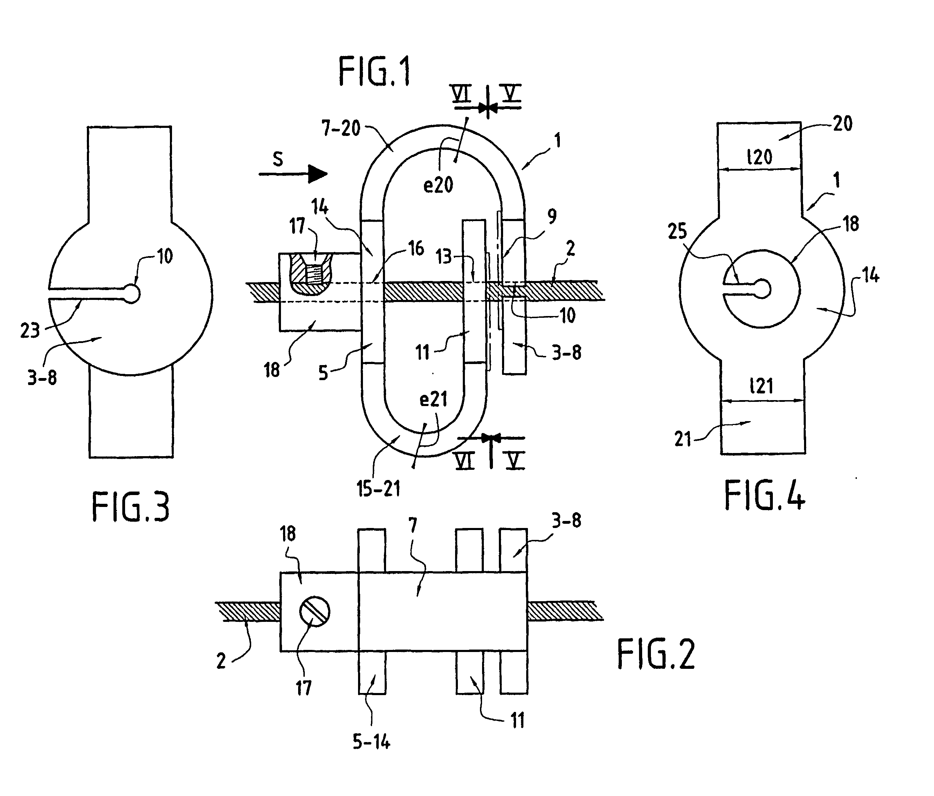

Sur les figures 3, 4, 5 et 6, le câble n'est pas représenté, afin de simplification.

Le dispositif représenté comprend un support de contacts 1, par la suite appelé simplement « support », monté sur un câble de commande 2 de freins de cycles.

Ce câble 2 est de tout type conventionnel. Par exemple, ce câble est constitué par des fils métalliques toronnés. Ce câble 2 est contenu, à l'exception de la courte longueur de mise en place du support 1, dans un tube de guidage, non représenté, du type à coefficient de frottement de réduit, comprenant par exemple un conduit interne en polytértrafluoréthylène et un tube d'enveloppe en polyacryle, polysulfone, ou tout autre matériau équivalent.

Le support 1 comprend :
- une première partie 3, fixe par rapport au cadre de cycle et rigidement montée sur ce cadre de cycle, non représenté, cette partie fixe 3 présentant une première surface de contact 4 ;
- une deuxième partie 5, mobile par rapport au cadre de cycle, et solidarisée au câble 2, cette partie mobile 5 présentant une seconde surface de contact 6 ;
- des moyens de liaison 7 entre la partie fixe 3 et la partie mobile 5, ces moyens de liaison 7 étant déformables de manière élastique entre :
   . un état extrême relâché pour le support 1, état représenté sur les figures et dans lequel les surfaces de contact 4,6 sont écartées l'une de l'autre, et
   . un état tendu pour le support 1, non représenté, dans lequel les surfaces de contact 4,6 sont en appui l'une contre l'autre, les moyens de liaison 7 étant alors déformés de manière élastique.

La partie fixe 3 comporte une plaque 8 pourvue d'une face plane 9 au travers de laquelle débouche un trou traversant 10 sensiblement perpendiculaire au plan d'extension de ladite face 9. Lorsque le support 1 est en position montée, le câble 2 peut coulisser sans frottement dans le trou traversant 10, notamment lors du serrage ou desserrage des freins. La première surface de contact 4 s'étend sur la face plane 9.

La partie mobile 5 comprend une plaque 11 pourvue d'une face plane 12 au travers de laquelle débouche un trou traversant 13 sensiblement perpendiculaire au plan d'extension de ladite face 12. La seconde surface de contact 6 s'étend sur la face plane 12.

Dans le mode de réalisation représenté en figures 1 à 6, la partie mobile 5 comprend en plus de ladite plaque 11, une plaque arrière 14, la plaque 11 et la plaque arrière 14 étant reliés par une section 15, cette section 15 subissant une déformation élastique lorsque le support 1 passe d'un état relâché à un état tendu. Dans cette réalisation, lorsque le support 1 est en position montée, le câble 2 peut coulisser sans frottement dans le trou traversant 13, notamment lors du serrage ou desserrage des freins.

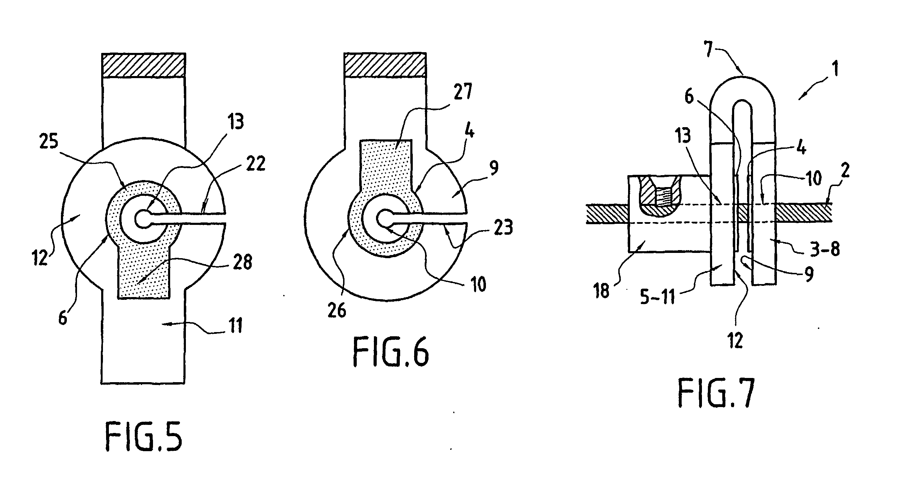

Dans d'autres modes de réalisation, schématisés en figure 7, la plaque 11 est montée rigidement fixée au câble 2, par exemple par vissage, collage, soudage ou tout autre procédé équivalent, le câble 2 ne pouvant alors coulisser dans le trou traversant 13.

Ainsi qu'il est représenté en figures 1 à 6, la plaque arrière 14 est pourvue d'un trou traversant 16 au travers duquel passe le câble 2. Lorsque le support 1 est en position montée, le câble 2 ne peut pas coulisser dans ce trou traversant 16, notamment lors du serrage ou du desserrage des freins. Par exemple, ainsi qu'il est représenté, une vis de blocage 17 est montée sur une patte filetée 18 solidaire de la plaque arrière 14 et écrase le câble 2 contre une butée lorsque le support 1 est en position montée.

Les deux faces planes 9, 12 supportant respectivement la première et la deuxième surface de contact sont sensiblement en regard et parallèles lorsque le support 1 est en position relâchée. Partant de cette position relâchée, l'actionnement du câble de commande 2, dans le sens de la flèche S de la figure 1 (serrage des freins), entraîne le rapprochement de la plaque 11 mobile par rapport à la plaque 8 fixe et la mise en appui des surfaces de contact 4,6.

Une traction supplémentaire sur le câble 2 entraîne la déformation des moyens de liaison 7 (réalisation de la figure 7) et de la section 15 (réalisation des figures 1 à 6). Le relâchement du câble 2 entraîne le mouvement inverse, et le retour à l'état relâché de la figure 1.

Dans la géométrie de réalisation des figures 1 à 6, les trois plaques 8,11,14 sont sensiblement identiques et en forme de disques percés de trous traversant alignés 10,13,16 pour le passage du câble 2. Ces disques sont reliés par des bandes déformables en forme d'arceau à rayons de courbures sensiblement constant, de sorte que le support 1, lorsque vue latéralement tel qu'en figure 1, comporte un premier arceau déformable 20, reliant la plaque avant 8 et la plaque arrière 14, et un deuxième arceau déformable 21 reliant la plaque arrière 14 et la plaque intermédiaire 11. Les largeurs I₂₀, I₂₁ des arceaux 20,21 sont sensiblement identiques. Les épaisseurs e₂₀, e₂₁ des arceaux sont sensiblement identiques à celles des plaques 8, 11, 14, dans la réalisation représentée.

D'autres géométries peuvent être mises en oeuvre. Ainsi qu'il est schématisé en figure 7, le support peut ne comporter qu'un seul arceau déformable reliant une plaque avant 8 fixée au cadre de cycle et une plaque arrière mobile 11 solidaire du câble 2. Les formes et dimensions des moyens de liaison déformables seront choisies, par un homme du métier, en fonction de la raideur souhaitée pour le support.

La mise en place du support sur le câble 2 peut être réalisée simplement, chaque plaque étant pourvue d'une étroite ouverture radiale 22,23,24 au travers de laquelle le câble 2 peut être inséré à force pour venir se loger dans les trous traversant 10,13,16. Ainsi que le montre les figures 1, 5 et 6, les fentes radiales 22,23 d'introduction du câble sont orientées selon deux directions opposées sur la plaque avant 8 et la plaque intermédiaire 11. Cette disposition permet de limiter les risques de perte du support 1, le câble 2 étant maintenu serré par l'élasticité transverse du support 1, entre la plaque avant 8 et la plaque intermédiaire 11.

Les surfaces de contact 4,6 comprennent une zone annulaire 25,26, coaxiales aux trous traversant 10,13, ces zones annulaires 25,26 étant reliées à des bandes conductrices 27,28 formant bornes d'un circuit électrique, non représenté, comprenant une ampoule solidaire du cadre de vélo.

Cette ampoule peut par exemple éclairer une surface réfléchissante revêtue d'un composé fluorescent. Le circuit électrique peut comprendre une batterie rechargeable ou des piles, ou bien encore être relié à une dynamo conventionnelle.

Le support 1 peut être réalisé en matériau polymère on en matériau composite. Le support 1 peut être monobloc, venu de matière ou non, ou bien encore élaboré par assemblage.

## Revendications

1. Support de contacts apte à être monté sur un câble de commande (2) de freins de cycles, ce support (1) comprenant :
- une première partie (3), destinée à être montée fixe par rapport au cadre de cycle, cette partie fixe (3) présentant une première surface de contact électrique (4),
- une deuxième partie (5), destinée à être mobile par rapport au cadre de cycle, apte à être solidarisée au câble (2), cette partie mobile (5) présentant une seconde surface de contact électrique (6),
ce support étant **caractérisé en ce qu'**il comprend des moyens de liaison (7) entre la partie fixe (3) et la partie mobile (5), ces moyens de liaison (7) étant aptes à être déformés de manière élastique entre :
- un état extrême relâché pour le support (1), dans lequel les surfaces de contact (4,6) sont écartées l'une de l'autre, et
- un état tendu pour le support (1), dans lequel les surfaces de contact (4,6) sont en appui l'une contre l'autre, les moyens de liaison (7) étant alors déformés de manière élastique.

2. Support de contacts selon la revendication 1, **caractérisé en ce que** la partie fixe (3) comporte une plaque (8) pourvue d'une face plane (9) au travers de laquelle débouche un trou traversant (10) sensiblement perpendiculaire au plan d'extension de ladite face (9), la première surface de contact (4) s'étendant sur la face plane (9), la partie mobile (5) comprenant une plaque intermédiaire (11) pourvue d'une face plane (12) au travers de laquelle débouche un trou traversant (13) sensiblement perpendiculaire au plan d'extension de ladite face (12), la seconde surface de contact (6) s'étendant sur la face plane (12).

3. Support de contacts selon la revendication 2, **caractérisé en ce que** la partie mobile (5) comprend en plus de ladite plaque intermédiaire (11), une plaque arrière (14), la plaque intermédiaire (11) et la plaque arrière (14) étant reliées par une section (15), cette section (15) étant apte à être déformée de manière élastique lorsque le support (1) passe d'un état relâché à un état tendu.

4. Support de contacts selon la revendication 2, **caractérisé en ce que** la plaque arrière (14) est pourvue d'un trou traversant (16) pour le passage du câble (2), le support (1) étant pourvu de moyens de solidarisation de la plaque arrière (14) au câble (2).

5. Support de contacts selon la revendication 4, **caractérisé en ce que** les moyens de solidarisation comprennent une vis de blocage (17) montée sur une patte filetée (18) solidaire de la plaque arrière (14) et apte à écraser le câble (2) contre une butée.

6. Support de contacts selon l'une quelconque des revendications 1 à 5, **caractérisé en ce que** les deux faces planes (9, 12) supportant respectivement la première et la deuxième surface de contact sont sensiblement en regard et parallèles lorsque le support (1) est en position relâchée.

7. Support de contacts selon la revendication 6, **caractérisé en ce qu'**il comporte trois plaques (8,11,14), sensiblement identiques et en forme de disques, percées de trous traversant alignés (10,13,16) pour le passage du câble (2), ces disques étant reliés par des bandes déformables en forme d'arceau (20,21).

8. Support de contacts selon la revendication 7, **caractérisé en ce que** des fentes radiales (22,23) d'introduction du câble sont orientées selon deux directions opposées sur la plaque avant (8) et la plaque intermédiaire (11).

9. Support de contacts selon la revendication 8, **caractérisé en ce que** les surfaces de contact (4,6) comprennent chacune une zone annulaire (25,26), ces zones annulaires étant coaxiales aux trous traversant (10,13), ces zones annulaires (25,26) étant reliées à des bandes conductrices (27,28) formant bornes d'un circuit électrique.

## Patentansprüche

1. Kontaktträger für die Montage auf einem Steuerungskabel (2) für Bremsen an Radfahrzeugen, wobei dieser Träger (1) umfasst:
- einen ersten Abschnitt (3) für die feste Montage relativ zu dem Rahmen des Radfahrzeugs, wobei der fest montierte Abschnitt (3) eine erste elektrische Kontaktoberfläche (4) aufweist, und
- einen zweiten Abschnitt (5) für die bewegliche Montage relativ zu dem Rahmen des Radfahrzeugs, der mit dem Kabel (2) fest verbunden werden kann, wobei dieser bewegliche montierte Abschnitt (5) eine zweite elektrische Kontaktoberfläche (6) aufweist,
**dadurch gekennzeichnet, dass** der Kontaktträger Verbindungseinrichtungen (7) zwischen dem fest montierten Abschnitt (3) und dem beweglich montierten Abschnitt (5) aufweist, wobei diese Verbindungseinrichtungen (7) elastisch verformt werden können zwischen:
- einem extrem entspannten (lockeren) Zustand für den Träger (1), in dem die Kontaktoberflächen (4,6) einen Abstand voneinander haben, und
- einem gespannten Zustand für den Träger (1), in dem die Kontaktoberflächen (4,6) aufeinander aufliegen, wobei die Verbindungseinrichtungen (7) dann elastisch verformt sind.

2. Kontaktträger nach Anspruch 1, **dadurch gekennzeichnet, dass** der fest montierte Abschnitt (3) eine Platte (8) aufweist, die mit einer ebenen Fläche (9) ausgestattet ist, die von einem durchgehenden Loch (10) im Wesentlichen senkrecht zur Ausdehnungsebene der genannten Fläche (9) durchquert wird, wobei die erste Kontaktoberfläche (4) sich auf der ebenen Fläche (9) erstreckt, und der bewegliche Teil (5) eine mittlere Platte (11) umfasst, die mit einer ebenen Fläche (12) ausgestattet ist, die von einem durchgehenden Loch (13) im Wesentlichen senkrecht zur Ausdehnungsebene der genannten Fläche (12) durchquert wird, wobei die zweite Kontaktoberfläche (6) sich auf der ebenen Fläche (12) erstreckt.

3. Kontaktträger nach Anspruch 2, **dadurch gekennzeichnet, dass** der bewegliche Teil (5) außerdem umfasst zusätzlich zu der genannten mittleren Platte (11) eine hintere Platte (14), wobei die Zwischenplatte (11) und die hintere Platte (14) durch einen Abschnitt 15 miteinander verbunden sind, der elastisch verformbar ist, wenn der Träger (1) von einem entspannten (lockeren) Zustand in einen gespannten Zustand übergeht.

4. Kontaktträger nach Anspruch 2, **dadurch gekennzeichnet, dass** die hintere Platte (14) mit einem durchgehenden Loch (16) für das Hindurchführen des Kabels (2) ausgestattet ist, wobei der Träger (1) mit Einrichtungen zum Befestigen der hinteren Platte (14) an dem Kabel (2) ausgestattet ist.

5. Kontaktträger nach Anspruch 4, **dadurch gekennzeichnet, dass** die Befestigungseinrichtungen umfassen eine Sicherungsschraube (17), die auf einem mit Gewinde versehenen Überwurf (Flansch) (18) montiert ist, der mit der hinteren Platte (14) fest verbunden und geeignet ist, das Kabel (2) gegen einen Anschlag fest anzupressen.

6. Kontaktträger nach einem der Ansprüche 1 bis 5, **dadurch gekennzeichnet, dass** die beiden ebenen Flächen (9, 12), die jeweils die erste und die zweite Kontaktoberfläche tragen, im Wesentlichen einander gegenüberliegend und parallel zueinander angeordnet sind, wenn der Träger (1) in der entspannten Position vorliegt.

7. Kontaktträger nach Anspruch 6, **dadurch gekennzeichnet, dass** er drei Platten (8, 11, 14) umfasst, die im Wesentlichen identisch sind und in Form von Scheiben vorliegen, die von aufeinander ausgerichteten Löchern (10, 13, 16) durchquert werden für das Hindurchführen des Kabels (2), wobei diese Scheiben durch bogenförmige Bänder (20, 21) miteinander verbunden sind.

8. Kontaktträger nach Anspruch 7, **dadurch gekennzeichnet, dass** radiale Schlitze (22, 23) zur Einführung des Kabels, die sich in zwei zueinander entgegengesetzten Richtungen erstrecken, in der vorderen Platte (8) und der mittleren Platte (11) vorgesehen sind.

9. Kontaktträger nach Anspruch 8, **dadurch gekennzeichnet, dass** die Kontaktoberflächen (4, 6) jeweils eine ringförmige Zone (25, 26) umfassen, wobei diese ringförmigen Zonen coaxial zu den durchgehenden Löchern (10, 13) verlaufen und mit elektrisch leitenden Bändern (27, 28) verbunden sind, die Anschlussklemmen eines elektrischen Stromkreises bilden.

## Claims

1. A contact support suitable for mounting on a cycle brake control cable (2), the support (1) comprising:
- a first portion (3) designed to be mounted fixed relative to the cycle frame, said fixed portion (3) having a first electrical contact surface (4);
- a second portion (5) designed to be movable relative to the cycle frame, and suitable for being secured to the cable (2), said moving portion (5) presenting a second electrical contact surface (6);
the support being **characterised in that** it comprises connection means (7) between the fixed portion (3) and the moving portion (5), said connection means (7) being suitable for being deformed elastically between:
- an extreme relaxed state for the support (1) in which the contact surfaces (4, 6) are spaced apart from each other; and
- a tensioned state for the support (1) in which the contact surfaces (4, 6) press against each other, the connection means (7) then being elastically deformed.

2. A contact support according to claim 1, **characterised in that** the fixed portion (3) comprises a plate (8) provided with a plane face (9) into which there opens out a through hole (10) extending substantially perpendicularly to the plane in which said face (9) extends, the first contact surface (4) extending over the plane face (9), the moving portion (5) comprising an intermediate plate (11) provided with a plane face (12) into which there opens out a through hole (13) extending substantially perpendicularly to the plane in which said face (12) extends, the second contact face (6) extending over the plane face (12).

3. A contact support according to claim 2, **characterised in that** the moving portion (5) comprises in addition to said intermediate plate (11), a rear plate (14), the intermediate plate (11) and the rear plate (14) being connected by a section (15), said section (15) being suitable for being deformed elastically when the support (1) passes from a relaxed state to a tensioned state.

4. A contact support according to claim 2, **characterised in that** the rear plate (14) is provided with a through hole (16) for passing the cable (2), the support (1) being provided with securing means for securing the rear plate (14) to the cable (2).

5. A contact support according to claim 4, **characterised in that** the securing means comprise a lock screw (17) mounted on a threaded tab (18) secured to the rear plate (14) and suitable for pressing the cable (2) against an abutment.

6. A contact support according to any one of claims 1 to 5, **characterised in that** the two plane faces (9, 12) respectively supporting the first and second contact surfaces face each other and are substantially parallel when the support (1) is in the relaxed position.

7. A contact support according to claim 6, **characterised in that** it comprises three substantially identical plates (8, 11, 14) in the form of disks each pierced by a respective through hole (10, 13, 16), which holes are in alignment to pass the cable (2), said disks being connected by deformable strips in the form of arches (20, 21).

8. A contact support according to claim 7, **characterised in that** radial slots (22, 23) for cable insertion extend in two opposite directions in the front plate (8) and in the intermediate plate (11).

9. A contact support according to claim 8, **characterised in that** each contact surface (4, 6) comprises an annular zone (25, 26), said annular zones being coaxial about the through holes (10, 13), said annular zones (25, 26) being connected to conductive strips (27, 28) forming terminals of an electrical circuit.
